# EUROPÄISCHE PATENTSCHRIFT

(11) **EP 1 221 842 B1**
(45) Veröffentlichungstag und Bekanntmachung des Hinweises auf die Patenterteilung: **28.05.2003**
(21) Anmeldenummer: 00989848.7
(22) Anmeldetag: 29.09.2000
(51) Int. Cl.: A01N 37/02

(54) **CARBONSÄUREFLUORIDE ALS SCHÄDLINGSBEKÄMPFUNGSMITTEL**
CARBOXYLIC ACID FLUORIDES USED AS PESTICIDES
FLUORURES D'ACIDE CARBOXYLIQUE UTILISES COMME AGENTS DE LUTTE CONTRE LES PARASITES

(30) Priorität: 07.10.1999 DE 19948496; 23.08.2000 DE 10041425
(43) Veröffentlichungstag der Anmeldung: 17.07.2002
(73) Patentinhaber: Solvay Fluor und Derivate GmbH, 30173 Hannover (DE)
(72) Erfinder: BRAUN, Max, 30900 Wedemark (DE); JANSSENS, Francine, B-1800 Vilvoorde (BE); FISCHER, Reiner, 38173 Dettum (DE)
(74) Vertreter: Fischer, Reiner
(86) Internationale Anmeldenummer: EP0009544
(87) Internationale Veröffentlichungsnummer: WO01024632

(56) Entgegenhaltungen:
- US-A- 3 679 720
- US-A- 4 544 504

## Beschreibung

Die Erfindung betrifft die Verwendung von Carbonsäurefluoriden als Schädlingsbekämpfungsmittel.

Es ist bekannt, Sulfurylfluorid als Schädlingsbekämpfungsmittel einzusetzen, siehe US-A 2,875,127. Man kann beispielsweise Schädlinge oder Pilze in verbautem oder unverbautem, auch in frisch gefälltem Holz bekämpfen, man kann durch Schädlinge wie Käfer oder Termiten befallene Gebäude entwesen, man kann Lagerräume entwesen; bekannt ist auch die Entwesung von Museen, Kirchen oder Mühlen. Es ist auch bereits bekannt, Sulfurylfluorid kombiniert mit Kohlendioxid, Inertgasen oder anderen Schädlingsbekämpfungsmitteln einzusetzen.

Erfindungsgemäß wurde gefunden, daß Carbonsäurefluoride als Schädlingsbekämpfungsmittel verwendbar sind. Der Begriff "Carbonsäurefluoride" umfaßt bevorzugt Carbonsäurefluoride mit insgesamt 2 bis 7 C-Atomen. Bevorzugt sind aliphatische Carbonsäurefluoride. Verbindungen mit einem gesättigten Alkylrest sind besonders bevorzugt. Brauchbar sind auch Carbonsäurefluoride, die eine oder mehrere C-C-Doppel- oder -Dreifachbindungen aufweisen. Der Alkyl-, Alkenyl- bzw. Alkinylrest kann auch substituiert sein, z. B. durch 1 oder mehrere Halogenatome, z. B. 1 oder mehrere Fluoratome. Besonders gut brauchbar sind Carbonsäurefluoride mit insgesamt 2 bis 4 C-Atomen, ganz besonders solche mit gesättigten Alkylresten. Sie können durch 1 oder mehr Halogenatome, vorzugsweise Chlor- und/oder Fluoratome, substituiert sein. Besonders bevorzugte Carbonsäurefluoride sind Fluoride der Formel RC(O)F, worin R für Methyl, Ethyl, Difluormethyl, Trifluormethyl und Difluorchlormethyl steht. Dabei liegt der Siedepunkt bevorzugter Carbonsäurefluoride bei vorzugsweise unterhalb 45 °C, insbesondere unterhalb 35 °C.

Gewünschtenfalls kann das Carbonsäurefluorid mit anderen Schädlingsbekämpfungsmitteln (Fumigantien) eingesetzt werden. Beispielsweise kann man das Carbonsäurefluorid mit Inertgasen (Stickstoff, Edelgase) und/oder Kohlendioxid zusammen einsetzen. Die Inertgase und CO₂ können dabei als Hilfsgase dienen, z. B. als Trägergas, z. B. bei Verbindungen mit höherem Siedepunkt. Auch die anderen Fumigantien können natürlich als Trägergase dienen. Inertgase und CO₂ weisen aber auch schädlingsbekämpfende Eigenschaften auf. Dabei kann man das Carbonsäurefluorid und das oder die anderen Fumigantien und/oder CO₂ vorgemischt, aber auch einzeln, gleichzeitig oder nacheinander, auch zeitlich überlappend, einsetzen. Dabei weisen bevorzugte zusätzlich einzusetzende Schädlingsbekämpfungsmittel ebenfalls einen Siedepunkt bei Normalbedingungen von weniger als 100 °C, vorzugsweise weniger als 45 °C, insbesondere weniger als 35 °C auf; oder man setzt Vernebelungsmittel ein. Kohlendioxid hat den Vorteil, daß die Konzentration an Carbonsäurefluorid verringert werden kann, da Kohlendioxid die Toxizität der Carbonsäurefluoride erhöht (erhöhte Atemfrequenz der Schädlinge).

Natürlich kann man an sich bekannte Maßnahmen vornehmen, die in Begasungsverfahren üblich sind. Beispielsweise kann man während der Begasung die Feuchte reduzieren, z. B. durch Einbringen von Trockenmittel (z. B. SiO₂) oder indem man die Behandlungsgasatmosphäre kontinuierlich oder diskontinuierlich über ein Trockenmittel führt. Man kann die Begasung mehrstufig durchführen. Bei der ersten Begasung wählt man die Bedingungen, besonders hinsichtlich der Begasungsmittelkonzentration, derart, daß die Larven und Adulten absterben. Die zweite und gegebenenfalls eine dritte oder weitere Begasungen werden durchgeführt, wenn die nicht abgetöteten Eier sich zum Larven- oder Adultenstadium entwickelt haben. Es ist bekannt, daß üblicherweise die Begasungsmittelkonzentration für die Bekämpfung von Larven oder Adulten niedriger sein kann als die für die Bekämpfung von Eiern benötigte Konzentration. Wenn man die Konzentration so wählt, daß nur die Larven oder Adulten bekämpft werden, dies aber mehrfach durchführt, stets wenn sich Larven oder Adulte neu entwickelt haben, verringert man den Verbrauch an Begasungsmittel. Alternativ kann man das Begasungsverfahren auch mit als Ovicide bekannten Begasungsmitteln durchführen, beispielsweise in Kombination mit Blausäure, Ameisensäureestern, Alkylisothiocyanaten oder PH₃. Gewünschtenfalls kann man das Begasungsverfahren auch kombiniert mit Vernebelungsmitteln wie Pyrethroiden durchführen, wie in der DE-OS 197 47 648 beschrieben ist. Man kann auch, wie in der österreichischen Patentschrift 154 481 offenbart, einen Ballon im zu begasenden Raum anordnen, um das Raumvolumen zu vermindern und auf diese Weise Begasungsmittel einzusparen.

Im erfindungsgemäßen Verfahren kann man ein oder mehrere Carbonsäurefluoride als einziges Schädlingsbekämpfungsmittel einsetzen. Das oder die Carbonsäurefluoride können aber auch unter Zusatz anderer Schädlingsbekämpfungsmittel eingesetzt werden. So kann man es zusammen mit einem oder mehreren Schädlingsbekämpfungsmitteln aus der Gruppe umfassend Sulfurylfluorid, Sulfurylchlorfluorid, Stickstoff, Edelgase, Kohlendioxid, Carbonylsulfid, PH₃, Alkylphosphine (Mono-, Di- und Trialkylphosphine), SF₆, anorganische und organische Verbindungen mit der CN-Gruppe, organische Ester, organische Nitroverbindungen, halogenierte Kohlenwasserstoffe, Alkinole, Thiocyanatester, Isothiocyanatester, Chloropikrin, Ethylenoxid, Sulfonylfluoride und, wie oben schon beschrieben, Vernebelungsmittel eingesetzt werden. Als Ester setzt zweckmäßig Alkylester ein, beispielsweise Alkylester der Ameisensäure, der Essigsäure etc. Chloropikrin kann als Warnmittel eingesetzt werden. Die Verwendbarkeit von Carbonylsulfid als Begasungsmittel ist in der WO 93/13659 offenbart. Brauchbare Ameisensäureester sind beispielsweise in der DE-OS 197 47 640 offenbart. Brauchbare Essigsäureester sind in der DE-OS 197 58 318 offenbart. Brauchbare Alkinole oder Thiocyanatester werden in der DE-OS 198 01 332 beschrieben, weitere Kohlensäureester auch in der DE-OS 198 13 894, und verwendbare Nitroverbindungen in der DE-OS 198 04 508. Brauchbare Sulfonylfluoride finden sich in der DE-PS 196 33 595. Blausäure und CF₃CN sind ebenfalls als Co-Begasungsmittel einsetzbar.

Das erfindungsgemäße Schädlingsbekämpfungsverfahren eignet sich für beliebige Zwecke. Beispielsweise kann man Räume begasen, in welchen sich die Schädlinge aufhalten, beispielsweise Lagerräume, Museen, Kirchen, Mühlen, Schiffsladeräume, Eisenbahnwaggons, Silos; mobile Zelte, in denen einzelne, zu begasende Güter eingebracht werden können; mobile Kammern, Container und auch Häuser wie Wohnhäuser. Zweckmäßig ist es natürlich, die entsprechenden Räume oder Behältnisse abzudichten, damit kein Begasungsmittel in die Umgebung gelangt. Man kann die Behältnisse oder Häuser auch in bekannter Weise in eine Folie einhüllen und so den Austritt von Behandlungsgas in die Atmosphäre verhindern. Die Abdichtung kann auch zur Verhinderung des Gasaustausches, wie im Internet unter http://www.morse-associates.com/pressure.html, Kapitel "Relative Pressure in Work Area", beschrieben, durch Klebeband, Abziehlack oder Kalfatern erfolgen. Man kann neben verbautem Holz auch unverbautes Holz behandeln. Beispielsweise kann man frisch gefälltes Holz oder bereits zugesägtes Holz in ein Zelt, eine Begasungskammer oder in eine Folienhülle einbringen und begasen. Dies kann die Ausbreitung von Schädlingen auch beim Export/Import verhindern (Quarantäne-Begasung).

Bevorzugt bekämpft man die bekannte Vorratsschädlinge und Materialschädlinge (insbesondere Holzschädlinge). Beispielsweise kann man den Tabakkäfer, den Kornkäfer, Motten, Mehlmilben, Reismehlkäfer, Klopfkäfer, Holzwürmer, den Hausbock oder Teppichkäfer bekämpfen. Bekämpfbar sind auch Termiten.

Das erfindungsgemäße Verfahren kann auch auf die Bodenentseuchung angewendet werden. Man kann dann beispielsweise Nematoden oder anderes Ungeziefer vernichten.

Bei der Begasung kann man übliche Maßnahmen vornehmen wie Arbeiten bei erhöhter Temperatur.

Die Temperatur bei der Schädlingsbekämpfung liegt vorteilhaft bei mindestens 10 °C, vorzugsweise zwischen 15 und 35 °C. Vorzugsweise arbeitet man bei einer Temperatur, die maximal 3°C niedriger als der Siedepunkt der Verbindung ist. Besonders bevorzugt führt man die Begasung bei oder oberhalb des Siedepunktes durch. Deswegen eignen sich Carbonsäurefluoride mit nicht zum hohem Siedepunkt für temperaturempfindliche Materialien besonders gut. Um hohe Mortalität der zu bekämpfenden Vorrats-, Erd- und Holzschädlinge sowie Nagetiere, Schadinsekten oder Pilze zu erzielen, liegt die Konzentration vorzugsweise im Bereich von 0,1 g/m³ bis 200 g/m³, die Zeitdauer wird entsprechend angepaßt. Je höher die Konzentration, desto kürzer die Einwirkungszeit. Das Behandlungsgas kann nach der Verwendung über Wasser oder alkalische Lösungen oder Alkali geleitet werden und wird dann zu unschädlichen Verbindungen zersetzt. Man kann das Gas auch durch Sorption, z. B. an Molekularsieb oder Aktivkohle, zurückgewinnen. Auch eine thermische Zersetzung oder katalytische Zersetzung (Verbrennung, Pyrolyse, Hochtemperaturhydrolyse) ist möglich.

Ein weiterer Gegenstand der Erfindung sind die in den Ansprüchen angegebenen Gemische von Carbonsäure fluoriden und mindestens einem weiteren, bekannten Schädlingsbekämpfungsmittel. Bevorzugte weitere Schädlingsbekämpfungsmittel sind die obengenannten Mittel. Gemische von Carbonsäurefluoriden und CO₂, als Gas, Flüssigkeit oder Feststoff, sind besonders bevorzugt. Diese Gemische können auch noch weitere Schädlingsbekämpfungsmittel enthalten.

Die Erfindung verbreitert die Palette brauchbarer Begasungsmittel, nach denen zur Zeit verzweifelt gesucht wird, weil MeBr ozonschädlich ist. Die Carbonsäurefluoride wirken sehr schnell, was in der Praxis natürlich von Vorteil ist. Acetylfluorid bildet nach Hydrolyse die aus der Natur bekannte Essigsäure.

Die Carbonsäurefluoride können z. B. aus der Carbonsäurechloriden und HF-Addukten von Aminen hergestellt werden, wie in der WO 00/32549 beschrieben ist.

Die folgenden Beispiele sollen die Erfindung weiter erläutern, ohne sie in ihrem Umfang einzuschränken.

### Beispiele

### Allgemeines:

Verwendete Schädlinge:
a) Vorratsschädlinge
   a1) Mehlkäfer (Tenebrio molitor) = TENEMO Größe: 12 - 18 mm, in ganz Europa in Getreide, Mehl und Mehlprodukten gefunden. In Deutschland einer der schlimmsten Schädlinge.
   a2) Reiskäfer (Sitophilus oryzae) = SITTOR Größe: 2,3 - 3,5 mm. Tropen, Subtropen, in Europa in warmen Lagerhäusern. Frißt Getreide aller Art und Mehlprodukte. Gefürchteter Vorratsschädling in warmen Ländern.
   a3) Vierhornkäfer (Gnathocerus cornutus) = GNATCO Größe: 3,5 - 4 mm. In Mühlen, Getreidespeichern und Bäckereien häufig. Käfer und Larven leben von Getreide und Getreideprodukten.
   a4) Getreideplattkäfer (Oryzaephilus surinamensis) = ORYZSA
      Größe: 2,5 - 3,5 mm. Über die ganze Erde verbreitet, lebt von Getreide, Mehl und Getreideprodukten.
b) Holzschädlinge
   b1) Hausbock (Hylotrupes bajulus) = HYLOBA Größe: 7 - 21 mm. Gefürchteter Schädling, die Larven zerfressen altes, verbautes Nadelholz völlig. In letzter Zeit hat der Hausbockkäferbefall stark zugenommen (durch Splintholzverwendung).
   b2) Gewöhnlicher Nagekäfer (Anobium punctatum) = NOBPU Größe: 2,5 - 5 mm. An verarbeitetem Bauholz, alten Möbeln, Kunstschätzen.
c) Amerikanische Trockenholztermiten, Cryptotermes brevis = CRYPBR, und Incisitermes tabogae = INCITA.
   Größe: 2,0 - 5 mm. Schaden richten diese Arten vor allem in den USA an, wo sie Holzhäuser befallen und oft schwere Schäden anrichten, wenn diese Häuser nicht rechtzeitig behandelt werden.

### Begasungsmittel:

Trifluoracetylfluorid (TFAF), Acetylfluorid (ACF), Chlordifluoracetylfluorid (CFAF) und, als Vergleich, SO₂F₂ (SF).

### Durchführung:

Die Versuchstiere wurden getrennt nach Arten in ein 30 cm x 30 cm x 60 cm großes Glasgefäß gegeben, welches mit einem Glasdeckel luftdicht verschlossen wurde. Dabei wurden die adulten Tiere und die Larven des Mehlkäfers (Tenebrio molitor) sowie des Vierhornkäfers (Gnathocerus cornutus) frei laufend in kleine Glasgefäße mit einem Durchmesser von ca. 5 cm gegeben und mit einem Gazedeckel verschlossen. Die Larven des Reiskäfers waren in Getreidekörner eingefressen. Die Larven der Holzschädlinge wurden in kleine, 5 cm x 2,5 cm x 2 cm, große Holzstücke eingesetzt. Die Öffnungen wurden mit Watte verschlossen. Vom Hausbock (Hylotrupes bajulus) wurde jeweils nur eine Larve je Holzstück eingesetzt. Vom gemeinen Nagekäfer (Anobium punctatum) wurden 6 - 8 Larven in ein Holzstück eingesetzt.

Über die Gaszuleitung wurde dann das jeweilige Gas aus einem Gasbehälter, der die vorgegebene Menge Gas enthielt, in das Begasungsgefäß geleitet. Nach einer definierten Zeitspanne wurde der Begasungsbehälter mit Preßluft gespült. Das ausgeleitete Gas wurde mit einem angeschlossenen Wäscher gereinigt.

Die Käfer wurden beobachtet, bis der Tod eintrat. Dieser Zeitpunkt wurde für jede Art notiert. Die Larven der Holzschädlinge sowie die Larven des Reiskäfers (Sittophilus oryzae) mußten aus dem Holz bzw. Getreide herausgesucht werden, um den Lebenszustand zu überprüfen. Waren noch Tiere lebendig, so wurden die im Gefäß verbliebenen Probehölzer nochmals begast und nach Ablauf der jeweiligen Zeitspanne erneut untersucht. Die gleiche Anzahl Tiere wurde bei jedem Termin ebenfalls von der unbehandelten Kontrolle überprüft.

In bestimmten Zeitintervallen wurde die Vitalität der Tiere überprüft. Die Käfer konnten durch das Begasungsgefäß beobachtet werden. Das gilt ebenfalls für die Larven der Mehlkäfer und die Larven der Vierhornkäfer. Die Probenhölzer der Larven der Holzschädlinge wurden mit Hammer und Beitel geöffnet. Die Larven der Reiskäfer wurden mit einer Pinzette aus den Getreidekörnern gezogen.

Die genauen Zeitintervalle und Anzahl der ausgewerteten Schädlinge ist bei den Versuchsergebnissen dokumentiert.

### Beispiel 1:

Verwendung von Trifluoracetylfluorid gegen Holzschädlinge

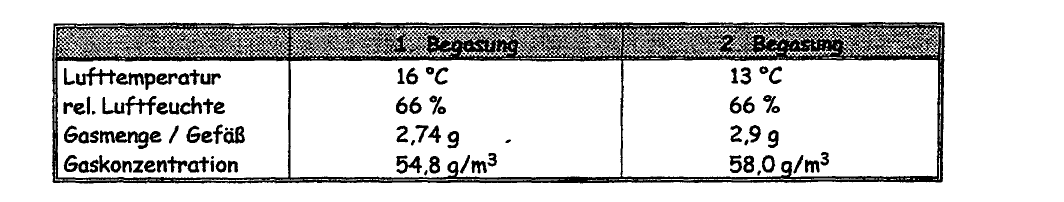

### Ergebnis:

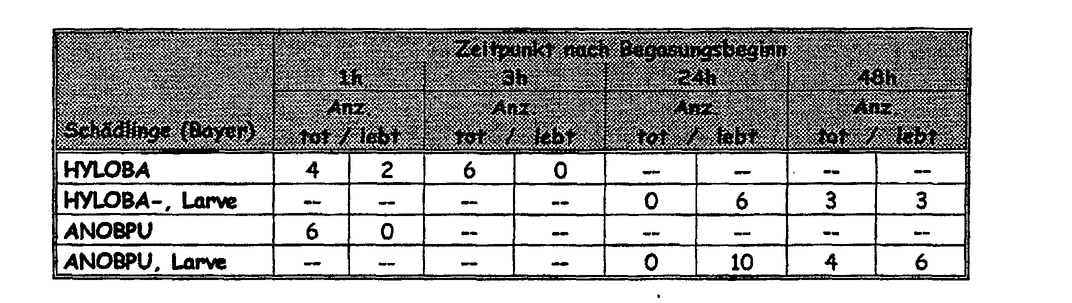

Freiliegende Käfer und Larven wurden relativ schnell getötet. Tiere begannen nach 1 - 2 Minuten sehr aktiv zu werden. Nach ca. 10 Minuten lagen alle Käfer auf dem Rücken und bewegten nur noch ihre Beine und Fühler etwas. Larven ohne Probenholz waren nach ca. 1 Stunde tot.

Das Gas dringt nicht in das Holz ein, um die Larven in einer Zeitspanne von 48 Stunden komplett zu töten.

Käfer und Larven der Kontrolle waren alle vital.

### Beispiel 2:

Verwendung von Trifluoracetylfluorid gegen Holzschädlinge, Luftumwälzung durch Lüfter

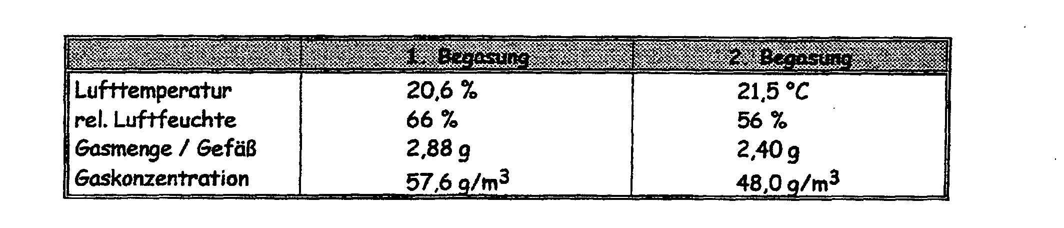

Versuch mit Lüfterbetrieb im Begasungsbehälter

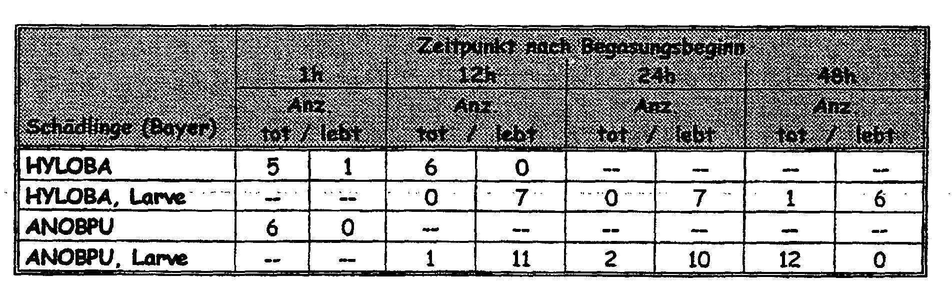

Auch mit Lüfter ergab sich keine Verbesserung der Wirkung in Bezug auf die Larven.

### Beispiel 3:

Verwendung von Trifluoracetylfluorid gegen Vorratsschädlinge

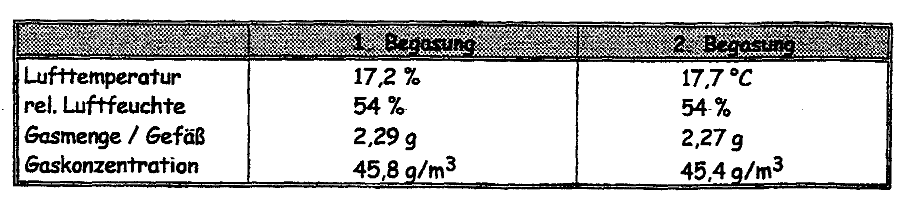

### Ergebnis:

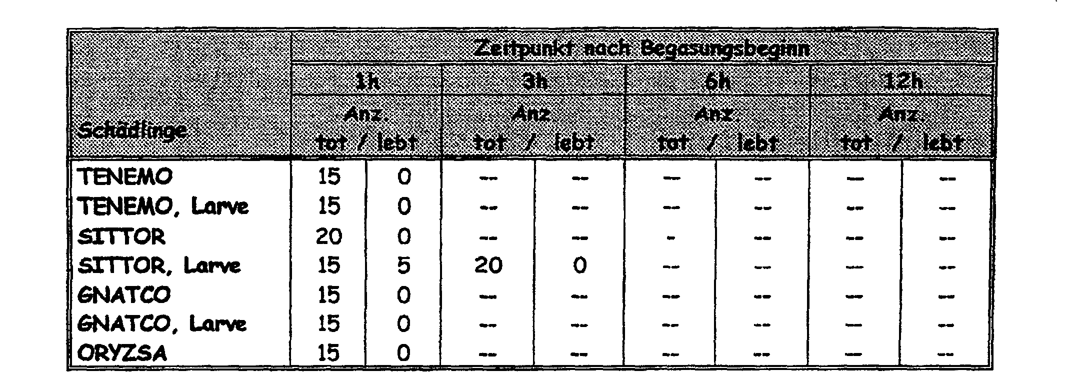

### Beispiel 4:

Verwendung von Acetylfluorid gegen Vorratsschädlinge

| | |
|---|---|
| Lufttemperatur | 19,3 °C |
| rel. Luftfeuchte | 54 % |
| Gasmenge/Gefäß | 1,82 g |
| Gaskonzentration | 36,5 g/m³ |

### Ergebnis:

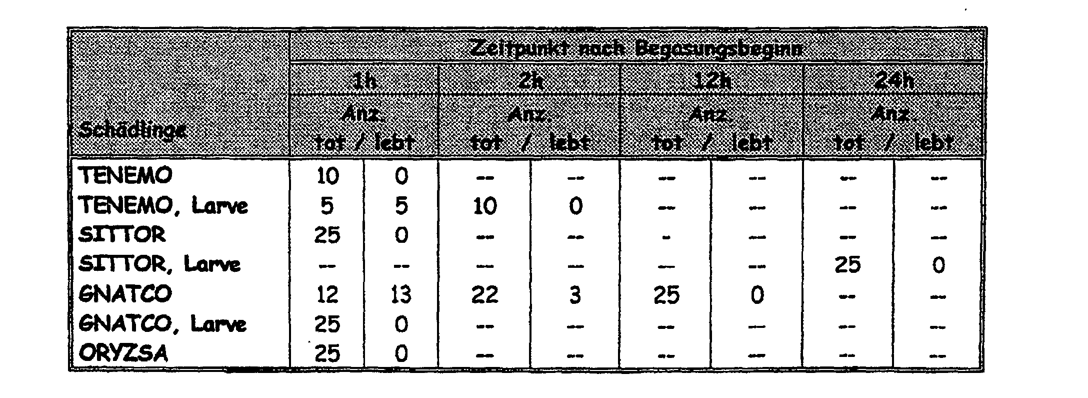

Zusätzlich zu den Vorratsschädlingen wurden noch 3 Käfer und Larven des Hausbockes und 2 Larven des gewöhnlichen Nagekäfers überprüft. Die Hausbockkäfer waren nach 15 Minuten tot.

Nach 24 Stunden waren die Larven der Holzzerstörer tot. Eine frühere Wirkung konnte nicht festgestellt werden, da die Bonitur erst nach 24 Stunden erfolgte.

### Beispiel 5:

Vergleich der Wirkung von Acetylfluorid (ACF) und Sulfurylfluorid (SF) auf Holz- und Vorratsschädlinge

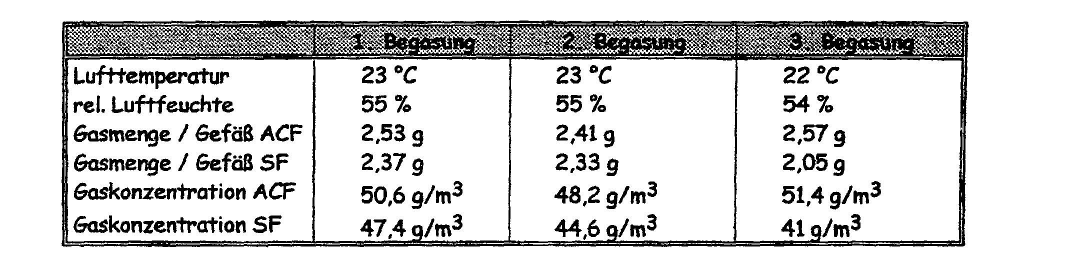

### Ergebnis:

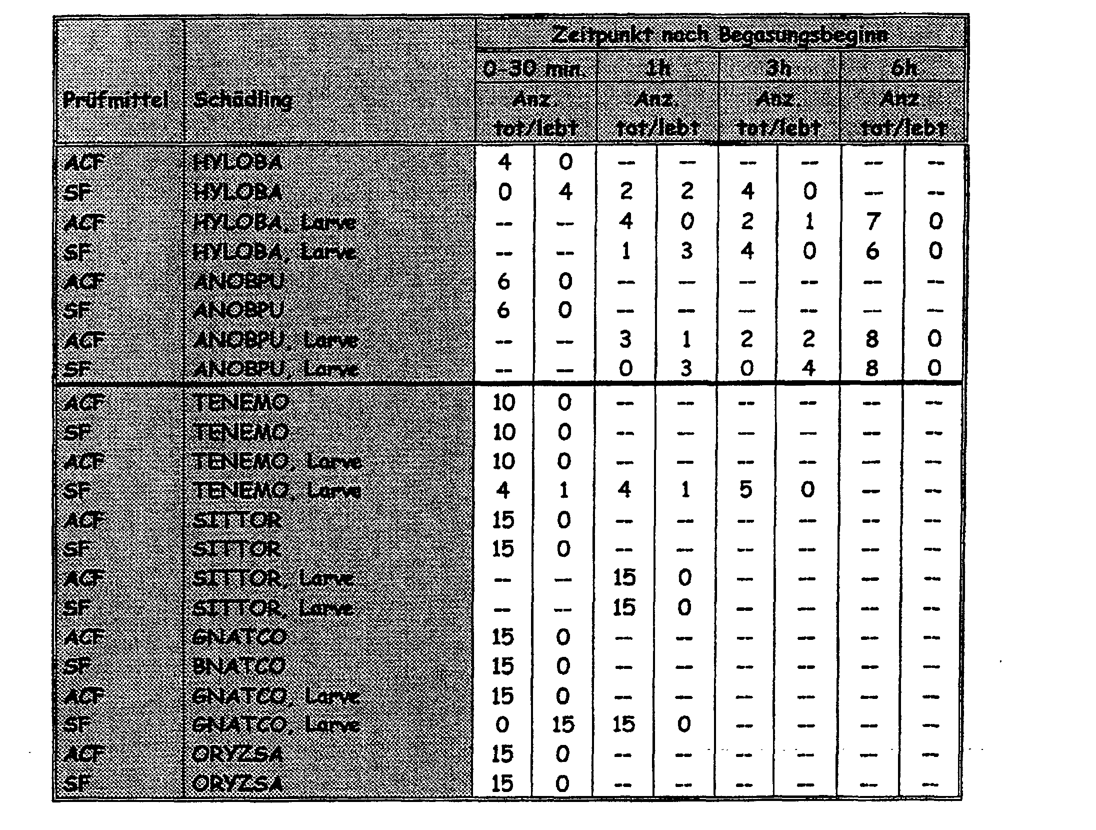

Sulfurylfluorid wirkt deutlich langsamer als Acetylfluorid.

### Fazit:

Sowohl Acetylfluorid als auch Trifluoracetylfluorid wirkten sehr gut gegen freilaufende Käfer und Larven.

Acetylfluorid ist sehr gut gegen Holzschädlinge einsetzbar, vorteilhaft bei einer Temperatur oberhalb von 20 °C (d. h. in der Nähe oder oberhalb des Siedepunktes). Es zersetzt sich beim Entlüften in unschädliche Essigsäure oder kann mit Basen zu unschädlichen Acetaten umgewandelt werden.

### Beispiel 6:

### Bekämpfung von Termiten

Acetylfluorid wurde zur Bekämpfung von Termiten eingesetzt. Es zeigte sich in einem Vergleichsversuch, daß es in seiner Wirkung der Wirkung von SO₂F₂ ebenbürtig ist. Besonders gut war die Wirkung auf Cryptotermes.

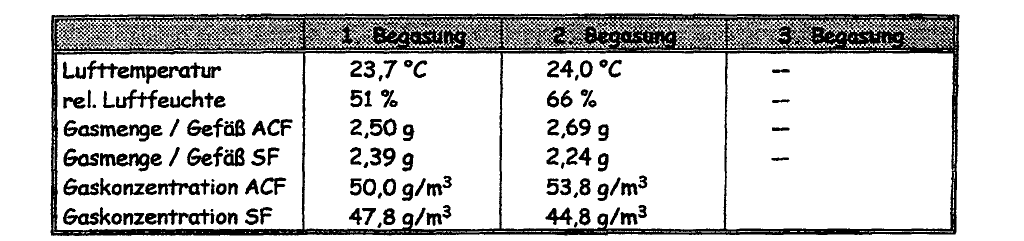

### Ergebnis:

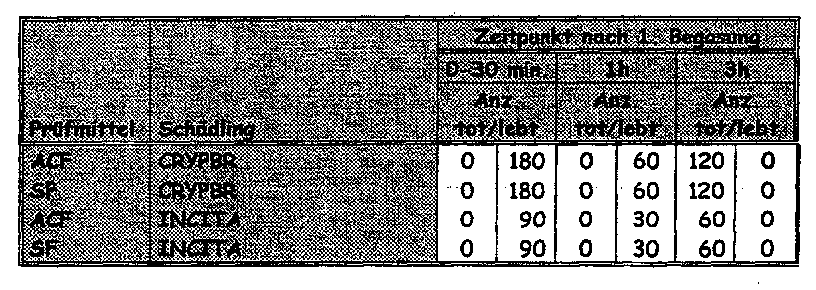

ACF = Acetylfluorid SF = Sulfurylfluorid

Nach 1 Stunde lebten zwar alle begasten Termiten noch, waren dennoch geschwächt und nicht so vital wie die Kontrolle.

Die mit Sulfurylfluorid behandelten Termiten waren nach 1 Stunde Begasungsdauer insgesamt vitaler als die mit Acetylfluorid begasten Termiten. Nach 24 Stunden Beobachtungszeit wurden diese Tiere erneut untersucht:

Bei Acetylfluorid waren von den Cryptotermes alle Tiere tot. Von Incisitermes lebten noch 3 von 30 Tieren.

Bei Sulfurylfluorid waren alle Incisitermes tot und von Cryptotermes lebten noch 7 von 60 Tieren.

Nach 3 Stunden Begasungsdauer waren alle Tiere sofort tot.

Insgesamt kann gesagt werden, daß Acetylfluorid schneller in das Holz einzudringen vermag und somit eine etwas schnellere Wirkung erzielt. Dies wurde durch die in den beschriebenen Zeitabständen untersuchten Termiten deutlich. Hier zeigten sich die mit Sulfurylfluorid begasten Tiere etwas vitaler als die mit Acetylfluorid begasten Tiere.

### Beispiel 7:

### Parallelversuch - Acetylfluorid/Chlordifluoracetylfluorid bei Holz und Vorratsschädlingen

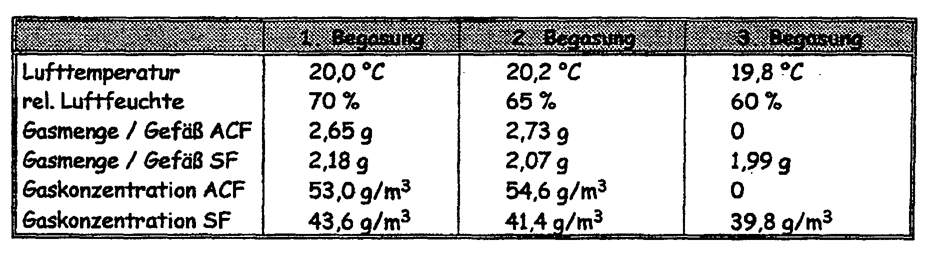

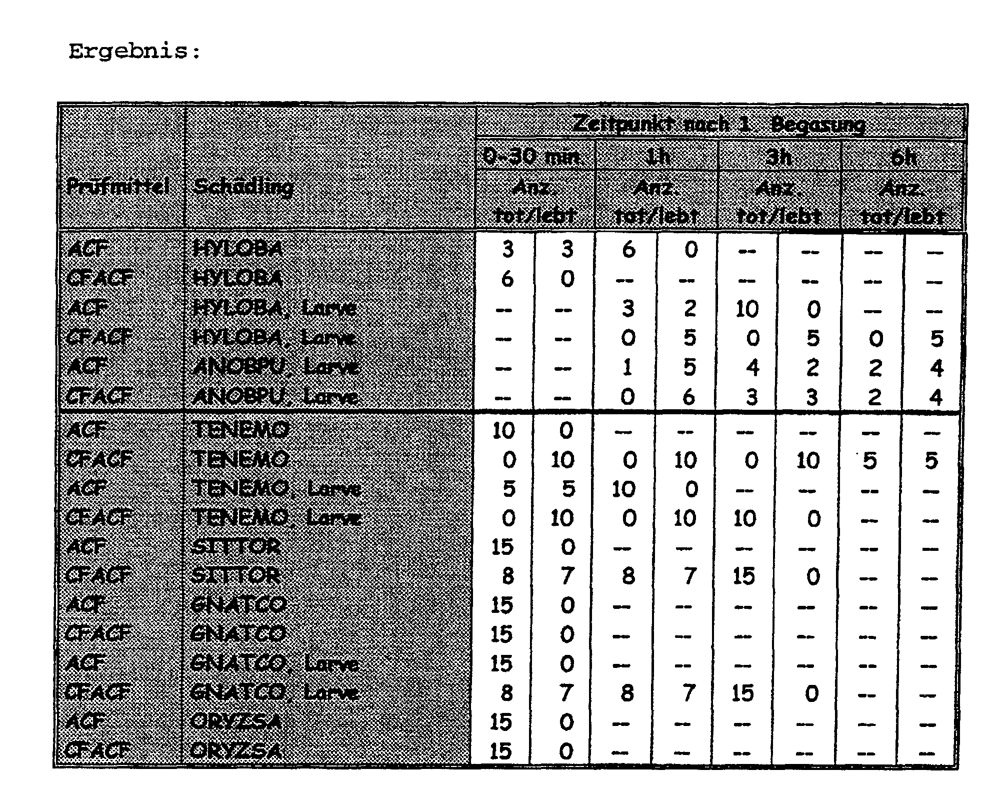

ACF = Acetylfluorid CFACF = Chlordifluoracetylfluorid

Es zeigt sich, daß Acetylfluorid bei mehreren untersuchten Schädlingsarten dem Chlordifluoracetylfluorid überlegen ist.

## Patentansprüche

1. Verwendung von Carbonsäurefluoriden mit einem Siedepunkt unterhalb von 100 °C als Schädlingsbekämpfungsmittel.

2. Verwendung nach Anspruch 1, **dadurch gekennzeichnet, daß** man Carbonsäurefluoride mit einem Siedepunkt unterhalb von 45 °C, insbesondere unterhalb von 30 °C einsetzt.

3. Verwendung nach Anspruch 1, wobei Carbonsäurefluoride der Formel RC(O)F mit R = CH₃, C₂H₅, CF₃, CF₂H oder CF₂Cl, eingesetzt werden.

4. Verwendung nach Anspruch 1 oder 2, **dadurch gekennzeichnet, daß** das Carbonsäurefluorid im Gemisch mit anderen Schädlingsbekämpfungsmitteln eingesetzt wird.

5. Verwendung nach Anspruch 4, **dadurch gekennzeichnet, daß** mindestens ein weiteres Schädlingsbekämpfungsmittel aus der Gruppe umfassend Sulfurylfluorid, Sulfurylchlorfluorid, Stickstoff, Edelgase, CO₂, Carbonylsulfid, PH₃, Alkylphosphine, SF₆, anorganische oder organische Verbindungen mit der CN-Gruppe, organische Ester, organische Nitroverbindungen, halogenierte Kohlenwasserstoffe, Alkinole, Thiocyanatester, Isothiocyanatester, Chloropikrin, Ethylenoxid, Sulfonylfluoride und Vernebelungsmittel eingesetzt wird.

6. Verwendung nach einem der vorhergehenden Ansprüche, **dadurch gekennzeichnet, daß** das Carbonsäurefluorid im Gemisch mit Kohlendioxid eingesetzt wird.

7. Gemische, umfassend mindestens ein Carbonsäurefluorid mit einem Siedepunkt unterhalb von 100 °C und mindestens ein weiteres Schädlingsbekämpfungsmittel.

8. Gemische nach Anspruch 7, enthaltend mindestens ein weiteres Schädlingsbekämpfungsmittel aus der Gruppe umfassend Sulfurylfluorid, Sulfurylchlorfluorid, Stickstoff, Edelgase, CO₂, Carbonylsulfid, PH₃, Alkylphosphine, SF₆, anorganische oder organische Verbindungen mit der CN-Gruppe, organische Ester, organische Nitroverbindungen, halogenierte Kohlenwasserstoffe, Alkinole, Thiocyanatester, Isothiocyanatester, Chloropikrin, Ethylenoxid, Sulfonylfluoride und Vernebelungsmittel.

9. Gemische nach Anspruch 7, umfassend ein Carbonsäurefluorid der Formel RC(O)F, worin R für Methyl, Ethyl, Difluormethyl, Difluorchlormethyl oder Trifluormethyl steht.

10. Gemische nach Anspruch 7, umfassend ein Carbonsäurefluorid und CO₂.

11. Gemische nach Anspruch 10, umfassend ein Carbonsäurefluorid, CO₂ und mindestens ein weiteres Schädlingsbekämpfungsmittel.

## Claims

1. The use of carboxylic acid fluorides with a boiling point below 100°C as pesticides.

2. The use according to Claim 1, **characterised in that** carboxylic acid fluorides with a boiling point below 45°C, in particular below 30°C, are used.

3. The use according to Claim 1, wherein carboxylic acid fluorides of the formula RC(O)F where R = CH₃, C₂H₅, CF₃, CF₂H or CF₂Cl are used.

4. The use according to Claim 1 or 2, **characterised in that** the carboxylic acid fluoride is used in a mixture with other pesticides.

5. The use according to Claim 4, **characterised in that** at least one additional pesticide from the group comprising sulphuryl fluoride, sulphuryl chloride fluoride, nitrogen, noble gases, CO₂, carbonyl sulphide, PH₃, alkyl phosphines, SF_{6,} inorganic or organic compounds with the CN group, organic esters, organic nitro compounds, halogenated hydrocarbons, alkynols, thiocyanate esters, isothiocyanate esters, chloropicrin, ethylene oxide, sulphonyl fluorides and nebulising agents is used.

6. The use according to one of the preceding claims, **characterised in that** the carboxylic acid fluoride is used in a mixture with carbon dioxide.

7. Mixtures, comprising at least one carboxylic acid fluoride having a boiling point below 100°C and at least one further pesticide.

8. Mixtures according to Claim 7, containing at least one additional pesticide from the group comprising sulphuryl fluoride, sulphuryl chloride fluoride, nitrogen, noble gases, CO₂, carbonyl sulphide, PH₃, alkyl phosphines, SF₆, inorganic or organic compounds with the CN group, organic esters, organic nitro compounds, halogenated hydrocarbons, alkynols, thiocyanate esters, isothiocyanate esters, chloropicrin, ethylene oxide, sulphonyl fluorides and nebulising agents are used.

9. Mixtures according to Claim 7, comprising a carboxylic acid fluoride of the formula RC(O)F, wherein R stands for methyl, ethyl, difluoromethyl, difluorochloromethyl or trifluoromethyl.

10. Mixtures according to Claim 7, comprising a carboxylic acid fluoride and CO₂.

11. Mixtures according to Claim 10, comprising a carboxylic acid fluoride, CO₂ and at least one further pesticide.

## Revendications

1. Utilisation de fluorures d'acide carboxylique à point d'ébullition inférieur à 100 °C, utilisés comme agents de lutte contre les parasites.

2. Utilisation selon la revendication 1, **caractérisée en ce que** l'on utilise des fluorures d'acide carboxylique à point d'ébullition inférieur à 45 °C, notamment inférieur à 30 °C.

3. Utilisation selon la revendication 1, les fluorures d'acide carboxylique de formule RC (O) F, avec R = CH₃, C₂H₅, CF₃, CF₂H ou CF₂Cl étant utilisés.

4. Utilisation selon la revendication 1 ou 2, **caractérisée en ce que** le fluorure d'acide carboxylique est mis en oeuvre comme mélange avec d'autres agents de lutte contre les parasites.

5. Utilisation selon la revendication 4, **caractérisée en ce qu'**on utilise au minimum un agent supplémentaire de lutte contre les parasites du groupe comprenant le fluorure de sulfuryle, le chlorofluorure de sulfuryle, l'azote, les gaz nobles, le CO₂, le sulfure carbonylique, le PH₃, les phosphines d'alkyle, le SF₆, les composés inorganiques ou organiques comportant le groupe CN, les esters organiques, les composés organiques nitrés, les hydrocarbures halogénés, les alcynols, les esters de thiocyanate, les esters d'isothiocyanate, la chloropicrine, l'oxyde d'éthylène, les fluorures de sulfonyle et les atomiseurs.

6. Utilisation selon l'une des revendications précédentes, **caractérisée en ce que** le fluorure d'acide carboxylique est utilisé en mélange avec du dioxyde de carbone.

7. Mélanges comprenant au minimum un fluorure d'acide carboxylique à point d'ébullition inférieur à 100 °C et au minimum un autre agent de lutte contre les parasites.

8. Mélanges selon la revendication 7, comprenant au minimum un autre agent de lutte contre les parasites du groupe comprenant le fluorure de sulfuryle, le chlorofluorure de sulfuryle, l'azote, les gaz nobles, le CO₂, le sulfure carbonylique, le PH₃, les phosphines d'alkyle, le SF₆, les composés inorganiques ou organiques comportant le groupe CN, les esters organiques, les composés organiques nitrés, les hydrocarbures halogénés, les alcynols, les esters de thiocyanate, les esters d'isothiocyanate, la chloropicrine, l'oxyde d'éthylène, les fluorures de sulfonyle et les atomiseurs.

9. Mélanges selon la revendication 7, comprenant un fluorure d'acide carboxylique de la formulé RC (O) F, où R représente du méthyle, de l'éthyle, du difluorométhyle, du difluorochlorométhyle ou du trifluorométhyle.

10. Mélanges selon la revendication 7, comprenant un fluorure d'acide carboxylique et du CO₂.

11. Mélanges selon la revendication 10, comprenant un fluorure d'acide carboxylique, du CO₂ et au minimum un autre agent de lutte contre les parasites.
